Europäisches Patentamt

(19) European Patent Office

Office européen des brevets

(11) Veröffentlichungsnummer: **0 158 071**
**B1**

(12) # EUROPÄISCHE PATENTSCHRIFT

(45) Veröffentlichungstag der Patentschrift:
29.04.87

(51) Int. Cl.⁴: **B 60 S 1/40**

(21) Anmeldenummer: **85102025.5**

(22) Anmeldetag: **23.02.85**

(54) **Befestigungsvorrichtung für Scheibenwischblatt.**

(30) Priorität: **06.03.84 FR 8403429**

(43) Veröffentlichungstag der Anmeldung:
**16.10.85 Patentblatt 85/42**

(45) Bekanntmachung des Hinweises auf die Patenterteilung:
**29.04.87 Patentblatt 87/18**

(84) Benannte Vertragsstaaten:
**DE FR GB IT SE**

(56) Entgegenhaltungen:
**BE-A-884 313**
**DE-A-3 208 235**
**FR-A-2 403 247**
**FR-A-2 475 481**
**GB-A-2 067 068**

(73) Patentinhaber: **PAUL JOURNEE S.A., 39, Avenue Marceau, F-92400 Courbevoie (FR)**

(72) Erfinder: **Duda, Jean, Grande Rue, F-60175 Villeneuve- les- Sablons (FR)**
Erfinder: **Journee, Maurice, Le Bois Hédouin, F-60240 Reilly (FR)**
Erfinder: **Percebois, Serge, 23, Résidence Bellevue, F-60240 Chaumont- en- Vexin (FR)**
Erfinder: **Romanek, Christian, 57, rue de Paris, F-60430 Noailles (FR)**

(74) Vertreter: **Patentanwaltsbüro Cohausz & Florack, Postfach 14 01 47, D-4000 Düsseldorf 1 (DE)**

EP 0 158 071 B1

## Beschreibung

Die Erfindung betrifft eine Vorrichtung zum lösbaren Befestigen eines Wischblatts an einem Wischarm mit Abschluß in Hakenform oder durch eine Querachse. Die Vorrichtung besteht aus einer haarnadelförmigen Klammer mit zwei Schenkeln unterschiedlicher Länge, die in bezug zueinander elastisch verformbar und drehbar um eine Querachse des Wischblatts gelagert sind. Der längere der beiden Schenkel umfaßt eine nach außen vorstehende Nase.

In bestimmten Fällen kann der Wischarm in Ruhestellung nicht ausreichend weit in bezug auf die Windschutzscheibe angehoben werden, um den Ausbau der mit einer bekannten Befestigung versehenen Wischblätter zu ermöglichen.

Aus der gattungsbildenden FR-A-2 403 247 ist zwar eine Befestigungsvorrichtung zum lösbaren Befestigen eines Wischblatts bekannt, bei der die Entriegelung der Wischblattbefestigung möglich ist, ohne daß es dafür eines Anhebens des Wischarms bedarf. Diese Befestigungsvorrichtung ist für Wischarme in Hakenform vorgesehen, die ein auf dem, dem Hakenende gegenüberliegenden Hauptteil des Wischarms eingeschnittenes Fenster aufweisen, in die eine nach außen vorstehende Nase der Klammer im Betrieb einliegt. Da das Fenster im Wischarm von der zu wischenden Fensterseite wegweist, ist zusätzlich an der Außenseite dieses Schenkels eine Erhebung vorgesehen, mit der die in dem Fenster des Wischarms einliegende Nase aus dem Fenster herausgedrückt werden kann, wenn das Wischblatt aus dem Wischarm gelöst werden soll.

Es sind jedoch auch Wischarme gebräuchlich, deren kurzes Hakenende das eingeschnittene Fenster aufweist, in die die vorstehende Nase der haarnadelförmigen Klammer im Betrieb einliegt. Da der diese Nase aufweisende Schenkel nach innen, zur zu wischenden Scheibe weist, kann dieser Schenkel nicht mehr ohne weiteres von außen betätigt werden. Zum Lösen des Wischblatts aus dem Wischarm ist daher das Anheben des Wischarms erforderlich.

Aufgabe der Erfindung ist es, eine Vorrichtung der eingangs genannten Art zu schaffen, bei der ein Entriegeln der Befestigung durch Zug bei hakenförmigen Armen und durch Schub bei Armen mit Querachse möglich ist, ohne daß es dafür eines Anhebens des Wischarms bedarf, wenn die nach außen vorstehende Nase an dem zur Scheibenseite gewandten Schenkel angeordnet ist.

Diese Aufgabe wird erfindungsgemäß dadurch gelöst, daß der Schenkel der Klammer, der die genannte Nase umfaßt, an seinem Ende versehen ist mit mindestens einem Vorsprung zum Entriegeln der Nase senkrecht zur Drehachse, der sich mindestens bis in Höhe des anderen Schenkels erstreckt.

Ein Zug am genannten Vorsprung ermöglicht das Entriegeln der in einem Fenster des hakenförmigen Wischarms sitzenden Nase ohne Anheben dieses Wischarms.

Um ein Befestigen an einem durch eine Querachse abgeschlossenen Wischarm zu ermöglichen, umfaßt der längere Schenkel eine innere Nase, die in eine Auskehlung der Achse des Wischarms eingreift. Ein einfaches Drücken am Vorsprung ermöglicht ein Ausrücken der inneren Nase und eine Freigabe der Achse.

Gut verständlich wird die Erfindung beim Lesen der folgenden Beschreibung in bezug auf die beigeheftete Zeichnung, in der

Abbildung 1 eine schematische Ansicht im Längsschnitt einer Befestigung nach einem Ausführungsbeispiel der Erfindung in Verriegelung am Ende eines hakenförmigen Wischarms ist;

Abbildung 2 ist eine Schnittansicht entlang der Linie II-II in Abbildung 1;

Abbildung 3 zeigt, analog zur Abbildung 1, die Befestigung im Verlauf der Entriegelung und das Wischblatt beim Ausbau;

Abbildung 4 zeigt, analog zur Abbildung 1, wie das Wischblatt an einer Querachse am Ende des Wischarms verriegelt ist, und

Abbildung 5 ist eine Ansicht im Längsschnitt, teilweise in Draufsicht, des Zusammenbaus in Abbildung 4.

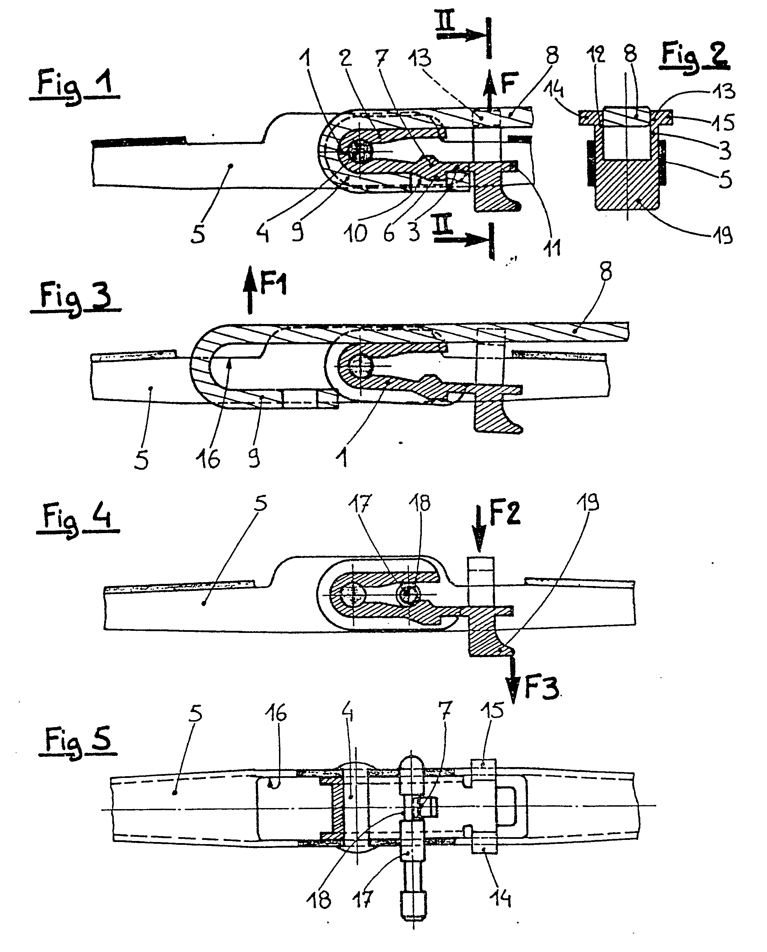

Die erfindungsgemäße Befestigung besteht aus einer haarnadelförmigen Klammer 1 mit einem kurzen Schenkel 2 und einem langen Schenkel 3, die in bezug zueinander elastisch verformbar sind. Die Klammer 1 ist drehbar um eine Querachse 4 des Wischblatts 5 gelagert. Die Außenfläche des langen Schenkels 3 umfaßt eine Nase 6, seine Innenfläche eine Nase 7. Bei Befestigung an einem Wischarm 8 mit Abschluß durch einen Haken 9, versehen mit einem Fenster 10 (Abbildungen 1 und 3), sitzt die äußere Nase 6 im Fenster 10, wodurch das Wischblatt 5 in bezug auf den Wischarm 8 verriegelt ist. Diese bekannte Befestigung erfordert zum Entriegeln ein Anheben des Wischarms 8, um an das freie Ende 11 des langen Schenkels 3 zu gelangen, damit dieses angehoben und die Nase 6 aus dem Fenster 10 entfernt werden kann.

Erfindungsgemäß umfaßt der lange Schenkel 3 der Klammer 1 an seinem Ende 11 zwei Vorsprünge 12 und 13 (Abb. 2) senkrecht zur Achse 4, die sich bis zur Höhe des kurzen Schenkels 2 der Klammer 1 erstrecken und den Wischarm 8 umgeben. Diese Vorsprünge 12 und 13 sind mit seitlichen Ösen 14 und 15 versehen, die ein Ziehen in Richtung des Pfeils F (Abb. 1) im Sinne einer Entriegelung erleichtern. Nach Verschiebung der Befestigung 1 nach rechts (in der Zeichnung) zwecks Lösung aus dem Haken 9 (Abb. 3) kann der Wischarm 8 leicht angehoben und so vom Wischblatt 5 über das darin befindliche obere Fenster 16 (Pfeil $F_1$) gelöst werden.

Wenn am Ende des Wischarms eine Querachse 17 (Abbildungen 4 und 5) mit einer Auskehlung 18 befestigt ist, wirkt die innere Warze 7 mit der genannten Auskehlung zwecks Verriegelung des Wischblatts 5 zusammen. Die Entriegelung erfolgt leicht durch Druck in Richtung des Pfeils $F_2$ auf die Vorsprünge 12 und 13 oder durch Zug in Richtung des Pfeils $F_3$ am Finger 19, der am langen Schenkel 3 entgegengesetzt zu den Vorsprüngen 12 und 13 angebracht ist.

**Patentansprüche**

1. Vorrichtung zum lösbaren Befestigen eines Wischblatts(5) am einem Wischarm (8) mit Abschluß in Hakenform (9) oder durch eine Querachse (17), bestehend aus einer haarnadelförmigen Klammer (1) mit zwei Schenkeln (2,3) unterschiedlicher Länge, die in bezug zueinander elastisch verformbar und drehbar um eine Querachse (4) des Wischblatts (5) gelagert sind, wobei der längere der beiden Schenkel (3) eine nach außen vorstehende Nase (6) umfaßt,
dadurch gekennzeichnet, daß der Schenkel (3) der Klammer (1), der die genannte Nase (6) umfaßt, an seinem Ende (11) versehen ist mit mindestens einem Vorsprung (13, 14) zum Entriegeln der Nase senkrecht zur Drehachse (4), der sich mindestens bis auf Höhe des anderen Schenkels (2) erstreckt.

2. Vorrichtung gemäß Anspruch 1, dadurch gekennzeichnet, daß der längere Schenkel (3) eine innere Nase (7) umfaßt, die mit einer Auskehlung (18) der Achse (17) des Wischarms (8) in Eingriff gelangt.

3. Vorrichtung gemäß einem der Ansprüche 1 oder 2, dadurch gekennzeichnet, daß der genannte Vorsprung (12, 13) mit einem seitlichen Flügel (14, 15) versehen ist.

4. Vorrichtung gemäß einem der Ansprüche 1 bis 3, dadurch gekennzeichnet, daß der längere Schenkel (3) der Klammer (1) einen vorspringenden Finger (19) entgegengesetzt zum genannten Vorsprung (12, 13) umfaßt.

**Claims**

1.) Device for the detachable fastening of a wiper blade (5) to a wiper arm (8) with termination in hook form (9) or by a transverse spindle (17), consisting of a clip (1) of hairpin form having two legs (2, 3) of different lengths which are elastically deformable in relation to one another and mounted rotatably about a transverse spindle (4) of the wiper blade (5), the longer of the two legs (3) comprising an outwardly protruding nose (6), characterised in that the leg (3) of the clip (1) which comprises the said nose (6) is provided at its end (11) with at least one protuberance (13, 14) for unlocking the nose perpendicularly of the rotation spindle (4), which protuberance extends at least to the level of the other leg (2).

2.) Device according to Claim 1, characterised in that the longer leg (3) comprises an inner nose (7) which comes into engagement with a groove (18) of the spindle (17) of the wiper arm (8).

3.) Device according to one of Claims 1 or 2, characterised in that the said protuberance (12, 13) is provided with a lateral wing (14, 15).

4.) Device according to one of Claims 1 to 3, characterised in that the longer leg (3) of the clip (1) comprises a protruding finger (19) opposite to the said protuberance (12, 13).

**Revendications**

1.- Dispositif pour la fixation démontable d'un balai d'essuie-glace (5) sur un bras d'essuie-glace (8) se terminant en forme de crochet (9) ou par un axe transversal (17) constitué d'un épingle (1) à deux branches (2,3) de longueurs différentes, qui sont élastiquement déformables l'une par rapport à l'autre et peuvent pivoter sur un axe transversal (4) du balai d'essuie-glace (5), la plus longue des deux branches (3) comportant un ergot (6) en saillie vers l'extérieur, caractérisé par le fait que la branche (3) de l'épingle (1) comportant ledit ergot (6) est munie à son extrémité (11) d'au moins une saillie (13,14) pour le déverrouillage de l'ergot orthogonalement à l'axe de pivotement (4), qui s'étend au moins jusqu'au niveau de l'autre branche (2).

2.- Dispositif selon la revendication 1, caractérisé par le fait que la branche (3) la plus longue comporte un ergot intérieur (7) qui ménage un palier pour une gorge (18) de l'axe (17) du bras (8).

3.- Dispositif selon l'une des revendications 1 et 2, caractérisé par le fait que ladite saillie (12,13) est munie d'une aile latérale (14,15).

4.- Dispositif selon l'une des revendications 1 à 3, caractérisé par le fait que la branche (3) la plus longue de l'épingle (1) comporte un doigt (19) en saillie à l'opposé de ladite saillie (12,13).

0 158 071

Fig 1

Fig 2

Fig 3

Fig 4

Fig 5